# EUROPÄISCHE PATENTANMELDUNG

(11) **EP 0 787 618 A2**
(43) Veröffentlichungstag der Anmeldung: **06.08.1997**
(21) Anmeldenummer: 97100902.2
(22) Anmeldetag: 22.01.1997
(51) Int. Cl.: B60K 28/04, B62D 51/00, A01D 34/68

(54) **Motorangetriebenes Fahrzeug,dessen Benutzer hinterher läuft,mit einem elektrischen Verriegelungskreis**

(30) Priorität: 31.01.1996 US 594739
(71) Anmelder: DEERE & COMPANY, Moline Illinois 61265-8098 (US)
(72) Erfinder: Peterson, Rudolph Andrew, Jr., Beaver Dam, Wisconsin 53916 (US)
(74) Vertreter: Feldmann, Bernhard

(57) **Zusammenfassung**

Bei einem durch einen Motor angetriebenen aber an Holmen von einer Bedienungsperson geführten Fahrzeug mit einer Stromquelle, einem Zündschalter (24), der wenigstens eine Betriebsstellung und eine Ausstellung aufweist, einer elektrisch einrückbaren Zapfwelle, einem zwischen der Stromquelle und der Zapfwelle vorgesehenen Zapfwellenschalter (50), einem Getriebe, einem Getriebeschalter (80), der bei sich in seiner Neutralstellung befindlichem Getriebe geschlossen ist, und mit einem Anwesenheitsschalter (94), wobei der Motor nur angelassen werden kann, wenn der Zapfwellenschalter (50 ) sich in seiner Ausstellung und der Getriebeschalter (80) sich in seiner geschlossenen Stellung befindet, und wobei der Motor betrieben werden kann, wenn sich das Getriebe in einer Schaltstellung befindet, ist das Fahrzeug mit einem von einer Bedienungsperson zu betätigenden Sicherheitsfahrschaltteil versehen, der mit dem Anwesenheitsschalter (94) verbunden ist, in seiner Betriebsstellung den Anwesenheitsschalter (94) geschlossen hält, in seiner Auslösestellung den Anwesenheitsschalter (94 ) öffnet und das Getriebe in einer Schaltstellung belässt, wobei die Verdrahtung von Anwesenheitsschalter (94 ) und Zündschalter (24) derart ist, dass der Motor bei sich in seiner Auslösestellung befindlichem Sicherheitsfahrschaltteil angelassen werden kann.

## Beschreibung

Die Erfindung bezieht sich auf ein Motor angetriebenes Fahrzeug mit einer Stromquelle, einem Zündschalter, der wenigstens eine Betriebsstellung und eine Ausstellung aufweist, einer elektrisch einrückbaren Zapfwelle, einem zwischen der Stromquelle und der Zapfwelle vorgesehenen Zapfwellenschalter, einem Getriebe, einem Getriebeschalter, der bei sich in seiner Neutralstellung befindlichem Getriebe geschlossen ist, und mit einem Anwesenheitsschalter, wobei der Motor nur angelassen werden kann, wenn der Zapfwellenschalter sich in seiner Ausstellung und der Getriebeschalter sich in seiner geschlossenen Stellung befindet, und wobei der Motor betrieben werden kann, wenn sich das Getriebe in einer Schaltstellung befindet.

Bei diesem Fahrzeug (US-A-5 314 038) ist der Anwesenheitsschalter als Sitzschalter ausgebildet, so dass das Fahrzeug nur angelassen werden kann, wenn sich die Bedienungsperson auf dem Fahrzeugsitz befindet. Diese Sicherheitseinrichtungen, die unter anderem ein Anlassen des Fahrzeugmotors unmöglich machen, wenn sich das Fahrzeuggetriebe nicht in seiner Neutralstellung befindet oder wenn eine Antriebswelle für ein Arbeitswerkzeug nicht ausgeschaltet ist, sind insbesondere bei Fahrzeugen, die in der Rasen- und Grundstückspflege eingesetzt werden, sinnvoll, damit das Fahrzeug sich sofort selbsttätig abstellt, wenn die Bedienungsperson den Fahrersitz verlässt. Andererseits können solche Fahrzeuge auch nur angelassen werden, wenn sich die Bedienungsperson auf dem Fahrersitz befindet. Nun werden in der Landschaftspflege auch selbstfahrende Geräte eingesetzt, die meist einachsig ausgebildet und deshalb nicht mit einem Sitz ausgestattet sind. An ihr vorderes Ende ist ein Arbeitswerkzeug, beispielsweise ein relativ breites Mähwerk, angeschlossen. An dem rückwärtigen Ende sind Holme vorgesehen, an denen derartige Geräte von Hand geführt werden. Insbesondere werden solche als "Profi-Mäher" bekannte Geräte an Böschungen und Hängen eingesetzt. d. h. in Gebieten, in denen eine erhöhte Unfallgefahr besteht. Diese Geräte sind deshalb mit einer Sicherheitsfahrschaltung oder Totmanneinrichtung ausgerüstet, die das Gerät sofort abbremst, wenn der Bedienungsperson beispielsweise bei Arbeiten am Hang das Gerät wegrutscht und wenn die Bedienungsperson dabei den Sicherheitsfahrschalthebel loslässt. Bei einer bekannten Sicherheitsfahrschaltung (EP-A1- 0 448 992) ist der Sicherheitsfahrschalthebel mit der Kupplung derart mechanisch verbunden, dass bei einem Loslassen des Sicherheitsfahrschalthebels - oder wenn sich der Sicherheitsfahrschalthebel in seine Auslösestellung verstellt - die Gerätekupplung ausgerückt und das Gerät abgebremst wird.

Die mit der Erfindung zu lösende Aufgabe wird darin gesehen, diese Sicherheitseinrichtungen insbesondere für selbstfahrende Geräte, die im Einsatz an Holmen geführt werden, nutzbar zu machen. Hierzu sieht die Erfindung nach einem ersten Aspekt vor, dass das Fahrzeug mit einem von einer Bedienungsperson zu betätigenden Sicherheitsfahrschaltteil versehen ist, der mit dem Anwesenheitsschalter verbunden ist, in seiner Betriebsstellung den Anwesenheitsschalter geschlossen hält, in seiner Auslösestellung den Anwesenheitsschalter öffnet und das Getriebe in einer Schaltstellung belässt, wobei die Verdrahtung von Anwesenheitsschalter und Zündschalter derart ist, dass der Motor bei sich in seiner Auslösestellung befindlichem Sicherheitsfahrschaltteil angelassen werden kann. Auf diese Weise kann der Motor eines mit einer Sicherheitsfahrschaltung ausgerüsteten Fahrzeugs nur angelassen werden, wenn der Antrieb für ein Arbeitswerkzeug ausgeschaltet ist und sich das Fahrzeuggetriebe nicht in einer Schaltstellung befindet. Die Sicherhietsfahrschaltung kann beim Anlassen in ihrer Auslösestellung verbleiben, das heisst, sie muss nicht von einer Bedienungsperson betätigt werden. Dies kann in solchen Fällen von Vorteil sein, in denen das Fahrzeug nicht mit einem elektrischen Anlasser versehen ist. Bei einem Loslassen des Sicherheitsfahrschaltteils stellt sich der Motor automatisch ab. Das Fahrzeug wird an einem Weiterrollen gehindert, da die Antriebsverbindung zwischen Motor und Getriebe nicht unterbrochen wird, was der Fall wäre, wenn eine Kupplung ausgerückt würde. Wenn eine Kupplung zwischen Motor und Getriebe vorgesehen ist, so bleibt diese beim sich ausstellenden Motor eingerückt. Diese Sicherheitseinrichtung ist damit auch bei solchen selbstfahrenden Geräten einsetzbar, die keine Kupplung benötigen.

Vorteilhaft ist der Zapfwellenschalter mit dem Anwesenheitsschalter derart verbunden, dass die Zapfwelle bei sich in seiner Auslösestellung befindlichen Sicherheitsfahrschaltteil nicht betrieben werden kann, d. h. um die Zapfwelle betreiben zu können, muss der Sicherheitsfahrschaltteil immer in seiner Betriebsstellung gehalten werden.

Nach einem weiteren Vorschlag der Erfindung ist ein Zündrelais vorgesehen, das eine erste und eine zweite Stellung einnehmen kann, wobei in der ersten Stellung ein Motorbetrieb verhindert wird, weil dann die Magnetzündung über das Zündrelais kurzgeschlossen ist, und in der zweiten Stellung möglich ist, wenn der Zündschalter sich in seiner Betriebs- oder Startstellung befindet und wenn eine erste Leitung von dem Zündschalter über den Zapfwellenschalter in seiner Ausstellung zu dem Getriebeschalter in seiner Neutralstellung oder wenn eine zweite Leitung von dem Zündschalter zu dem geschlossenen Anwesenheitsschalter bei geschlossenem Zapfwellenschalter und/oder offenem Getriebeschalter stromführend ist, wobei die erste und die zweite Leitung an die Spule des Zündrelais angeschlossen sind und dadurch das Zündrelais im stromführenden Zustand in seiner zweiten Stellung halten, gleichgültig, ob das Fahrzeug mit einem elektrischen Anlasser ausgerüstet ist oder nicht.

Ist das Fahrzeug nicht mit einem elektrischen Anlasser ausgerüstet, so kann nach der Erfindung in der zweiten Leitung zwischen dem Zündschalter und dem Anwesenheitsschalter ein Initialrelais vorgesehen sein. In einem solchen Fall sollte das Initialrelais mit seinem Eingang an den Zündschalter und mit seinem Ausgang an seine Relaisspule und an zwei Klemmen des Anwesenheitsschalters angeschlossen sein, die im geschlossenen Zustand des Anwesenheitsschalters eine Verbindung zu der Spule des Zündrelais, zu dem Zündrelais selbst in dessen zweiter Stellung und zu der Zapfwelle bei geschlossenem Zapfwellenschalter herstellen. Auf diese Weise kann dann die Spule des Initialrelais zunächst über den Anwesenheitsschalter erregt werden, wobei bei sich in seiner Schaltstellung befindlichem Initialrelais eine Halteschleife gebildet wird.

Ist das Fahrzeug mit einem elektrischen Anlasser ausgerüstet, so ermöglichen der Zapfwellenschalter und der dazu in Reihe geschaltete Getriebeschalter eine stromführende Verbindung zu dem Zündrelais und zu dem Starterkreis bei sich in seiner Ausstellung befindlichem Zapfwellenschalter, bei geschlossenem Getriebeschalter und bei sich in seiner Startstellung befindlichem Zündschalter, wobei eine Diode vorgesehen ist, die an einer Seite mit dem Zündschalter in seiner Startstellung sowie mit dem Getriebeschalter und an ihrer anderen Seite mit dem Zündrelais und mit dem Anwesenheitsschalter verbunden ist.

In der Zeichnung ist ein nachfolgend näher erläutertes Ausführungsbeispiel der Erfindung dargestellt. Es zeigt:
Fig. 1 einen Schaltkreis für ein Fahrzeug mit einem Seilzugstarter und
Fig. 2 einen Schaltkreis für ein Fahrzeug mit einem elektrischen Anlasser.

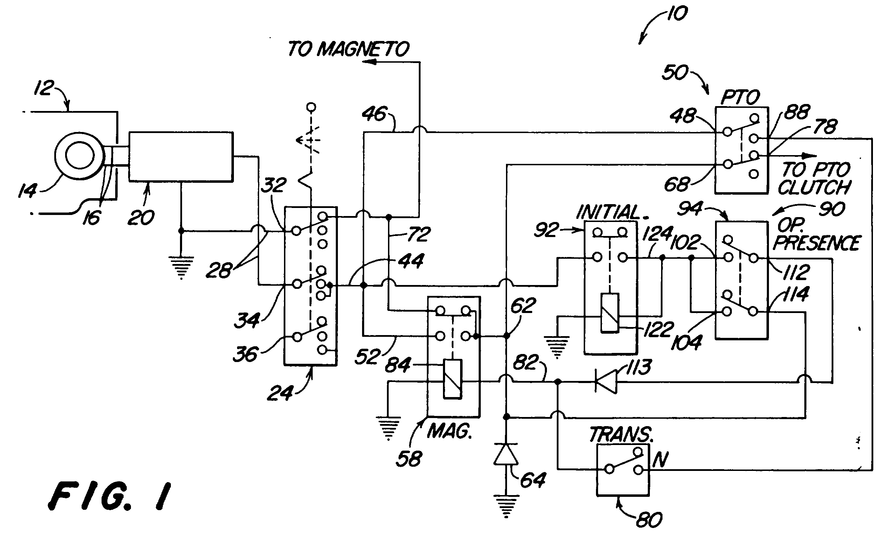

Der aus Fig. 1 der Zeichnung erkennbare elektrische Schaltkreis 10 oder die aus dieser Figur erkennbare Verdrahtung ist für ein Motor getriebenes Arbeitsgerät bzw. -Fahrzeug konzipiert, das im Arbeitseinsatz von einer sich nicht auf dem Arbeitsgerät befindlichen Bedienungsperson an Holmen geführt wird. Ein derartiges Arbeitsgerät kann ein Motor angetriebener Mäher sein. In jedem Fall ist ein solches Arbeitsgerät mit einem Motor 12 mit Magnetzündung und mit einer elektrischen Kraftquelle 14 ausgerüstet. Die elekrische Kraftquelle kann bei dem Ausführungsbeispiel nach Fig. 1 ein Wechselstromgenerator sein. Dieser weist Ausgangsleitungen 16 auf, die an einem Gleichrichter 20 angeschlossen sind. Ein herkömmliches Zündschloss oder -schalter 24 ist über Leitungen 28 mit dem Gleichrichter 20 verbunden und geerdet. Das Zündschloss hat drei Stellungen, und zwar eine obere Ausstellung, eine mittlere Lauf- oder Betriebsstellung und eine untere Startstellung. Beim Ausführungsbeispiel nach Fig. 1 ist das Arbeitsfahrzeug nicht mit einem elektrischen Starter sondern mit einer manuellen Anwerfvorrichtung, wie einem Seilzugstarter ausgestattet.

Das Zündschloss 24 oder der Zündschalter ist mit einem oberen und einem mittigen Eingang 32 und 34 versehen, die jeweils an die Leitungen 28 angeschlossen sind. Eine untere Klemme 36 bleibt frei, da das Zündschloss nicht an einen elektrischen Anlasser angeschlossen ist. Der obere Eingang 32 ist geerdet und schliesst die Magnetzündung (TO MAGNETO) an Masse an, um einen Motorbetrieb zu verhindern, wenn sich das Zündschloss in seiner oberen Ausstellung befindet. Andererseits wird der Kreis von der Magnetzündung zur Masse offen, wenn sich das Zündschloss nicht mehr in seiner oberen Ausstellung befindet. In einem solchen Fall ist dann ein Motorbetrieb möglich.

Der mittige Eingang 34 des Zündschlosses 24 ist offen, wenn sich das Zündschloss in seiner oberen Ausstellung befindet. Befindet sich das Zündschloss aber in seiner Betriebs- oder Startstellung, dann ist der mittlere Eingang 34 mit einem Ausgang 44 verbunden. Dieser Ausgang 44 ist über eine Leitung 46 an den ersten Eingang 48 von zweien eines Zapfwellenschalters 50 (PTO) angeschlossen. Der Ausgang 44 ist ferner über eine zweite Leitung 52 an eine von zwei Klemmen eines Magnet- oder Zündrelais 58 (MAG.) angeschlossen. Die gegenüberliegende Klemme ist an eine Leitung 62 angeschlossen, die einmal zu einer Diode 64 und zum anderen zu einem zweiten Eingang 68 des Zapfwellenschalters 50 führt. Die Leitung 62 ist ausserdem noch an die zweite Klemme des Magnet- oder Zündrelais 58 angeschlossen. Die hierzu gehörige Eingangsklemme des Magnet- oder Zündrelais 58 ist über eine Leitung 72 an die Magnetzündung angeschlossen, um diese über die Diode 64 zu erden und um einen Motorstart oder Betrieb zu verhindern, wenn sich das Relais 58 in seinem in Fig. 1 gezeigten deaktivierten Zustand befindet.

Befindet sich dagegen das Relais 58 in seinem aktivierten Zustand (der Relaisschalter befindet sich dann in seiner unteren Stellung) und befindet sich das Zündschloss 24 entweder in seiner Start- oder in seiner Betriebsstellung, dann ist die Leitung 62 über die Leitung 52 an die Leitung 28 und damit an die Kraftquelle angeschlossen. Auf diese Weise ist eine Verbindung zu dem Eingang 68 des Zapfwellenschalters 50 hergestellt. Befindet sich der Zapfwellenschalter 50 in der in Fig. 1 eingezeichneten Betriebsstellung, dann ist die Leitung 62 an eine Ausgangsleitung 78 des Zapfwellenschalters 50 angeschlossen, die zu der elektrisch betätigbaren Zapfwellenkupplung (TO PTO CLUTCH) führt. Letztere wird betätigt, wenn die Leitung 78 an die Kraftquelle angeschlossen ist.

Desweiteren ist ein Getriebeschalter 80 (TRANS.) mit seiner einen Seite über eine Leitung 82 mit der Relaisspule 84 des Magnet- oder Zündrelais 58 verbunden. Die andere Seite des Getriebeschalters 80 ist an eine Ausgangsklemme 88 des Zapfwellenschalters 50 angeschlossen. Der Getriebeschalter 80 ist offen, wenn sich das Getriebe in einer Schaltstellung befindet. Der Getriebeschalter ist geschlossen, wenn sich das Getriebe in seiner Neutralstellung (N) befindet. Befindet sich nun der Zapfwellenschalter 50 nicht in seiner Betriebsstellung, sondern in seiner Ausstellung (untere Stellung in Fig.1, in der keine Verbindung zur Leitung 78 besteht) und ist der Getriebeschalter 80 bei sich in seiner Start- oder in seiner Betriebsstellung befindlichem Zündschloss 24 geschlossen, so wird die Relaisspule 84 des Magnet- oder Zündrelais 58 erregt, weil dann eine stromführende Verbindung über die Klemmen 48, 88 und den Schalter 80 besteht. Bei diesen Schaltstellungen ist die Kurzschlussverbindung der Magnetzündung über das Zündschloss 24 und über das Magnet- oder Zündrelais 58 unterbrochen, so dass der Motor gestartet und/oder am Laufen gehalten werden kann. Sobald nun aber der Zapfwellenschalter 50 in seine in Fig. 1 eingezeichnete Betriebsstellung verstellt wird, wird die Verbindung zwischen dem Getriebeschalter 80 und der Kraftquelle unterbrochen. In einen solchen Fall würde normalerweise die Magnetzündung kurzgeschlossen und der Motor ausgehen. Um dies zu verhindem, ist in dem Schaltkreis 10 noch ein Teilkreis 90 vorgesehen, der in Abhängigkeit von der Anwesenheit einer Bedienungsperson agiert. Dieser Teilkreis ist zwischen die Kraftquelle und die Leitung 82 geschaltet und bewirkt bei einem Zusammentreffen von bestimmten Faktoren, dass das Magnet- oder Zündrelais 58 dennoch aktiviert bleibt.

Zu diesem Teilkreis 90 gehört zunächst ein Initialrelais 92 (INITIAL.), dessen Eingangsklemme an die Leitung 44 und dessen Ausgangsklemme an einen die Anwesenheit einer Bedienungsperson registrierenden Schalter, der nachfolgend als Anwesenheitsschalter 94 (OP PRESENCE) bezeichnet ist, angeschlossen ist. Ein derartiger Schalter ist Bestandteil einer Sicherheitseinrichtung, die bei Dienstunfähigkeit der Bedienungsperson einen Fahrzeugstop bewirkt, wenn diese beispielsweise nicht ständig einen Hebel, Bügel usw. in einer bestimmten Stellung hält. Bei dem bevorzugten Ausführungsbeispiel wird ein Bügel beim Führen des Fahrzeugs von der Bedienungsperson mit erfasst. Wird der Bügel losgelassen, dann sperrt eine Getriebekupplung im eingerückten Zustand, wobei der Anwesenheitsschalter 94 dann seine offene Stellung nach Fig. 1 einnimmt. Hält dagegen die Bedienungsperson den Bügel, so nimmt der Anwesenheitsschalter 94 seine geschlossene Stellung ein. Der Relaisschalter des Initialrelais 92 ist offen, wenn die zugehörige Relaisspule nicht aktiviert ist. Ist die Relaisspule dagegen aktiviert, so verstellt der Relaisschalter sich in seine geschlossene Stellung, so dass ein stromführender Weg zwischen dem Ausgang 44 und zwei Eingängen 102 und 104 möglich wird, die beide an dem Anwesenheitsschalter 94 vorgesehen sind. Der Anwesenheitsschalter 94 ist noch mit zwei zu den Eingängen 102 und 104 korrespondierenden Ausgängen 112 und 114 versehen, wobei der Ausgang 112 über eine Sperrdiode 113 mit der Leitung 82 für das Magnet- oder Zündrelais 58 in Verbindung steht, um das Relais 58 aktiviert zu halten, wenn der Anwesenheitsschalter 94 geschlossen ist. Das Initialrelais 92 ist mit einer Spule 122 ausgestattet, die mit ihrer einen Seite an Masse und mit ihrer anderen Seite an eine Ausgangsleitung 124 angeschlossen ist, so dass das Relais 92, nachdem es einmal aktiviert war, in seiner Betriebsstellung verriegelt wird. Die hierzu gebildete Halteschleife wird erst dann wieder gelöst, wenn das Zündschloss 24 in seine Ausstellung verstellt wurde oder das Arbeitsfahrzeug bzw. sein Motor auf andere Art gestoppt wurde, so dass der Stromfluss zu dem Ausgang 44 unterbrochen ist. Auch die Eingangsklemme 68 am Zapfwellenschalter 50 kann über Klemmen 104, 114 des Anwesenheitsschalters 94 für eine Aktivierung der Zapfwellenkupplung stromführend werden, wenn der Anwesenheitsschalter geschlossen ist.

Um bei einem Fahrzeug, das mit dem Schaltkreis nach Fig. 1 ausgerüstet ist, nun den Motor anlassen zu können, muss die Bedienungsperson den Zapfwellenschalter 50 in seine Ausstellung und das Getriebe in seine Neutralstellung verstellen, wobei der Getriebeschalter in seine geschlossene Stellung verstellt wird. Auf diese Weise entsteht ein geschlossener Stromweg zwischen dem Ausgang 44 am Zündschloss 24 und der Relaisspulenleitung 82 des Magnet- oder Zündrelais 58. Das Zündschloss wird in seine Betriebsstellung verstellt und die Anwerfvorrichtung kann betätigt werden. Sobald der Motor sich dreht, wird das Magnet- oder Zündrelais 58 aktiviert und sein Relaisschalter verstellt sich in die untere Stellung, wobei die Kurzschlussverbindung der Magnetzündung unterbrochen wird. Sobald der Motor läuft, kann die Bedienungsperson auch den Anwesenheitsschalter 94 schliessen, indem sie sich an ihren Platz für den Fahrzeugbetrieb begibt und beispielsweise einen an den Holmen vorgesehenen Bügel hochzieht und in dieser Stellung festhält. Bei geschlossenem Anwesenheitsschalter entsteht ein Stromweg von dem Ausgang 44 über den sich dann in seiner unteren Stellung befindlichen Relaisschalter des Zündrelais 58 zu den Klemmen 114 und 104 am Anwesenheitsschalter 94 und weiter zu dem Initialrelais 92, um dieses zu aktivieren und in seiner Betriebsstellung (untere Schalterstellung) zu verriegeln. Solange dann der Anwesenheitsschalter 94 in seiner geschlossenen Stellung verbleibt, kann der Zapfwellenschalter 50 in seiner Betriebsstellung zum Einrücken der Zapfwellenkupplung verbleiben. Sobald die Bedienungsperson bei sich in Betriebsstellung befindlichem Zapfwellenschalter 50 und/oder bei sich nicht in seiner Neutralstellung befindlichem Getriebe durch ein Fehlverhalten (der Bügel wird nicht mehr festgehalten) den Anwesenheitsschalter öffnet, stellt sich der Fahrzeugmotor sofort aus. Da der Bügel auch mit der Kupplung verbunden ist, rückt diese bei einem Loslassen des Bügels ein und das Fahrzeug ist bei eingerücktem Gang und abgestelltem Motor blockiert. Um ein automatisches Ausgehen des Fahrzeugmotors zu verhindern, muss die Bedienungsperson dafür Sorge tragen, dass der Anwesenheitsschalter 94 geschlossen oder der Zapfwellenschalter offen und der Getriebeschalter 80 geschlossen ist.

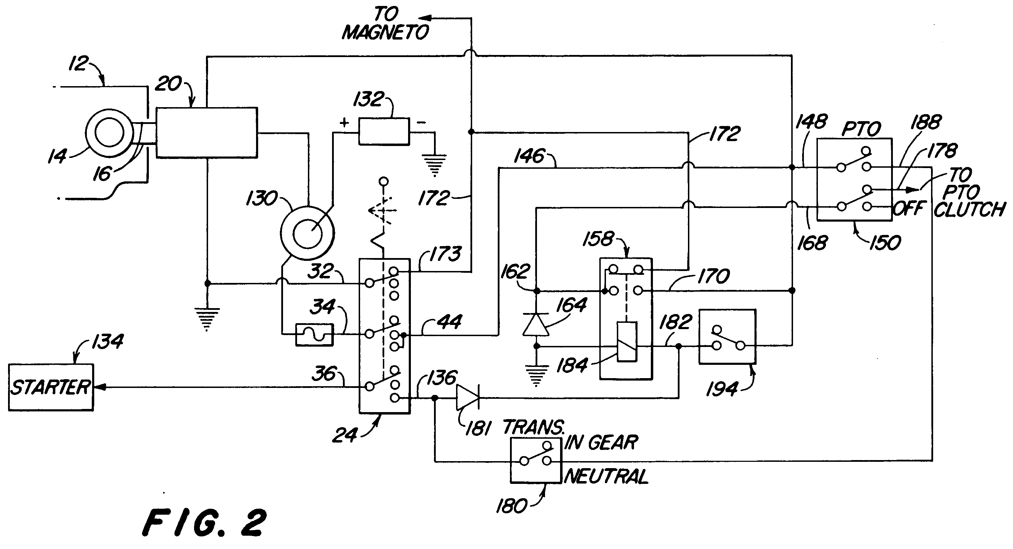

Fig. 2 zeigt nun einen Schaltkreis, der dem in Fig. 1 ähnlich ist, aber für ein Fahrzeug bestimmt ist, das ausser mit einem Motor 12 mit einem elektrischen Starter 130 und natürlich dann auch mit einer Batterie 132 ausgestattet ist. In einem solchen Fall ist an die untere Eingangsklemme 36 des Zündschlosses 24 ein Start-Solenoid-Kreis 134 (STARTER) angeschlossen. Der Ausgang 44 am Zündschloss 24 ist über eine Leitung 146 an einen ersten Eingang 148 des Zapfwellenschalters 150 (PTO) angeschlossen. Das Magnet- oder Zündrelais 158 hat eine an seinen Relaisschalter angeschlossene Ausgangsleitung 162, die an eine an Masse angelegte Diode 164 und an einen zweiten Eingang 168 des Zapfwellenschalters 150 angeschlossen ist. Eine zweite an dem Relaisschalter des Zündrelais 158 angeschlossene Ausgangsleitung 170 ist mit dem Gleichrichter 20 und der Leitung 146 verbunden. Der Relaisschalter des Zündrelais 158 hat eine zweite obere Betriebsstellung, in der er immer noch an die Ausgangsleitung 162 und an eine Leitung 172 angeschlossen ist. Die Leitung 172 führt zu der obersten Ausgangsklemme des Zündschalters 24, so dass die Leitung 172 geerdet ist, wenn sich der Zündschalter in seiner Ausstellung befindet. An den Zapfwellenschalter 150 ist eine Ausgangsleitung 178 angeschlossen, die zu der Zapfwellenkupplung (TO PTO CLUTCH) führt. Diese kann damit über die Eingangsleitung 168 und das Relais 158 von der Leitung 170 aus aktiviert werden, wenn der Motor läuft und das Relais aktiviert (der Relaisschalter befindet sich in seiner unteren Stellung) ist. Der Getriebeschalter 180 (TRANS) ist an die Startklemme 136 des Zündschlosses 24 angeschlossen. Die Startklemme 136 und der Getriebeschalter 180 sind über eine Diode 181 an eine Aktivierungsleitung 182 angeschlossen, über die eine Spule 184 an dem Relais 158 aktiviert werden kann. Die andere Seite des Getriebeschalters 180 ist an eine Ausgangsklemme 188 des Zapfwellenschalters 150 angeschlossen, um einen geschlossenen Weg von der Ausgangsklemme 44 zu der Klemme 136 über die Leitung 146, die Klemmen 148, 188 und den Schalter 180 zu schaffen, sofern der Getriebeschalter 180 geschlossen (NEUTRAL) und der Zapfwellenschalter 150 offen (OFF) ist.

Wird nun das Zündschloss 24 in seine untere oder Startstellung verstellt und befindet sich der Zapfwellenschalter 150 in seiner offenen Stellung (OFF) und der Getriebeschalter in seiner geschlossenen Stellung (NEUTRAL), so kann ein Strom zu der Startklemme fliessen und den Solenoidkreis 134 aktivieren, wodurch über den Starter 130 der Motor in Drehung versetzt wird. Aus Fig. 2 ist zu erkennen, dass nur dann ein Strom zu der Startklemme 136 gelangen und der Motor in Drehung versetzt werden kann, wenn der Zapfwellenschalter 150 offen ist und das Getriebe sich in seiner Neutralstellung befindet, in der der Getriebeschalter 180 geschlossen ist. Über die Diode 181 von der Klemme 136 zu der Spule 184 gelangender Strom unterbricht die Kurzschlussverbindung der Magnetzündung (TO MAGNETO) und erlaubt dem Motor anzuspringen, sofern der Zapfwellenschalter offen und der Getriebeschalter geschlossen ist.

Der Anwesenheitsschalter 194 ist zwischen dem Gleichrichter 20 und der Zündspulenleitung 182 vorgesehen, um das Relais 158 in seinem aktivierten Zustand und die Masseverbindung der Magnetzündung offen zu halten, wenn sich die Bedienungsperson an ihrem vorgegebenen Arbeitsplatz an der Maschine aufhält, damit das Getriebe in eine Schaltstellung verbracht und/oder die Zapfwelle eingeschaltet werden kann, ohne dass dabei der Motor ausgeht. Befindet sich die Bedienungsperson an ihrem vorgegebenen Platz, so schliesst der Schalter 194 und der Kreis zwischen der Klemme 148 an dem Zapfwellenschalter 150 und der Startklemme 136 am Zündschloss 24 kann unterbrochen werden, ohne dass das den laufenden Motor beeinträchtigen würde. Andererseits verhindert die Diode 181 ein Starten des Motors bei anwesender Bedienungsperson, wenn nicht zuvor der Zapfwellenschalter in seine Ausstellung und das Getriebe in seine Neutralstellung verstellt wurden. Bei dem bevorzugten Ausführungsbeispiel wird der Anwesenheitsschalter 194 über einen Handbügel ein- und ausgeschaltet, so dass, wenn die Bedienungsperson während des Betriebes den Handbügel aus irgendeinem Grund loslässt, der Motor sofort ausgeht, weil in einem solchen Fall das Relais durch den sich öffnenden Schalter 194 sofort in seinen deaktivierten Zustand übergeht, in dem die Magnetzündung über die Diode 164 kurzgeschlossen ist. Diese Folge tritt natürlich nicht ein, wenn zuvor der Zapfwellenschalter 150 geöffnet und der Getriebeschalter 180 geschlossen wurden.

## Patentansprüche

1. Motor angetriebenes Fahrzeug mit einer Stromquelle, einem Zündschalter (24), der wenigstens eine Betriebsstellung und eine Ausstellung aufweist, einer elektrisch einrückbaren Zapfwelle, einem zwischen der Stromquelle und der Zapfwelle vorgesehenen Zapfwellenschalter (50, 150), einem Getriebe, einem Getriebeschalter (80, 180), der bei sich in seiner Neutralstellung befindlichem Getriebe geschlossen ist, und mit einem Anwesenheitsschalter (94, 194), wobei der Motor nur angelassen werden kann, wenn der Zapfwellenschalter (50, 150) sich in seiner Ausstellung und der Getriebeschalter (80, 180) sich in seiner geschlossenen Stellung befindet, und wobei der Motor betrieben werden kann, wenn sich das Getriebe in einer Schaltstellung befindet, dadurch gekennzeichnet, dass das Fahrzeug mit einem von einer Bedienungsperson zu betätigenden Sicherheitsfahrschaltteil versehen ist, der mit dem Anwesenheitsschalter (94, 194) verbunden ist, in seiner Betriebsstellung den Anwesenheitsschalter (94, 194) geschlossen hält, in seiner Auslösestellung den Anwesenheitsschalter (94, 194) öffnet und das Getriebe in einer Schaltstellung belässt, wobei die Verdrahtung von Anwesenheitsschalter (94, 194) und Zündschalter (24) derart ist, dass der Motor bei sich in seiner Auslösestellung befindlichem Sicherheitstahrschaltteil angelassen werden kann.

2. Fahrzeug nach Anspruch 1, dadurch gekennzeichnet, dass der Zapfwellenschalter (50, 150) mit dem Anwesenheitsschalter (94, 194) derart verbunden ist, dass die Zapfwelle bei sich in seiner Auslösestellung befindlichem Sicherheitsfahrschaltteil nicht betrieben werden kann.

3. Fahrzeug nach Anspruch 1, gekennzeichnet durch ein Zündrelais (58, 158), das eine erste und eine zweite Stellung einnehmen kann, wobei in der ersten Stellung ein Motorbetrieb verhindert wird und in der zweiten Stellung möglich ist, wenn der Zündschalter (24) sich in seiner Betriebs- oder Startstellung befindet und wenn eine erste Leitung von dem Zündschalter (24) über den Zapfwellenschalter (50, 150) in seiner Ausstellung zu dem Getriebeschalter (80, 180) in seiner geschlossenen Stellung oder wenn eine zweite Leitung von dem Zündschalter (24) zu dem geschlossenen Anwesenheitsschalter (94, 194) bei geschlossenem Zapfwellenschalter (50, 150) und/oder offenem Getriebeschalter (80, 180) stromführend ist.

4. Fahrzeug nach Anspruch 3, dadurch gekennzeichnet, dass die erste und die zweite Leitung an das Zündrelais (58, 158) angeschlossen sind und dieses im stromführenden Zustand in seiner zweiten Stellung halten.

5. Fahrzeug nach Anspruch 3 oder 4, dadurch gekennzeichnet, dass in der zweiten Leitung zwischen dem Zündschalter (24) und dem Anwesenheitsschalter (94, 194) ein Initialrelais (92) vorgesehen ist.

6. Fahrzeug nach einem oder mehreren der vorherigen Ansprüche, dadurch gekennzeichnet, dass das Initialrelais (92) mit seinem Eingang an den Zündschalter (24) und mit seinem Ausgang an seine Relaisspule (122) und an zwei Klemmen des Anwesenheitsschalters (94) angeschlossen ist, die im geschlossenen Zustand des Anwesenheitsschalters (94, 194) eine Verbindung zu der Spule (84) des Zündrelais (58, 158), zu dem Zündrelais (58, 158) selbst in dessen zweiter Stellung und zu der Zapfwelle bei geschlossenem Zapfwellenschalter (50, 150) herstellen.

7. Fahrzeug nach einem oder mehreren der vorherigen Ansprüche, dadurch gekennzeichnet, dass ein elektrischer Anlasser (130) vorgesehen ist, wobei der Zapfwellenschalter (150) und der Getriebeschalter (180) eine stromführende Verbindung zu dem Zündrelais (158) und zu dem Starterkreis bei sich in seiner Ausstellung befindlichem Zapfwellenschalter (150), bei geschlossenem Getriebeschalter (180) und bei sich in seiner Startstellung befindlichem Zündschalter (24) ermöglichen.

8. Fahrzeug nach Anspruch 7, gekennzeichnet durch eine Diode (181), die an einer Seite mit dem Zündschalter (24) in seiner Startstellung sowie mit dem Getriebeschalter (180) und an ihrer anderen Seite mit dem Zündrelais (158) und mit dem Anwesenheitsschalter (194) verbunden ist.
